# EUROPEAN PATENT APPLICATION

(11) **EP 4 844 842 A1**
(43) Date of publication of application: **25.11.2026**
(21) Application number: 26179556.1
(22) Date of filing: 19.05.2026
(51) Int. Cl.: H01M 4/62, H01M 10/056, H01M 10/0525, H01M 4/02

(54) **POSITIVE ELECTRODE AND RECHARGEABLE LITHIUM BATTERY COMPRISING THE SAME**

(30) Priority: 20.05.2025 KR 20250065094
(71) Applicant: SAMSUNG SDI CO., LTD., Yongin-si, Gyeonggi-do 17084 (KR); IUCF-HYU (Industry-University Cooperation Foundation Hanyang University), Seoul 04763 (KR)
(72) Inventor: PARK, Keemin, 17084 Yongin-si (KR); KIM, Beomkwon, 17084 Yongin-si (KR); SONG, Taeseup, 04763 Seoul (KR); MYEONG, Seungcheol, 04763 Seoul (KR)
(74) Representative: Maiwald GmbH

(57) **Abstract**

The present disclosure relates to a positive electrode, and a rechargeable lithium battery including the positive electrode. The positive electrode of the present disclosure includes a positive electrode current collector and a positive electrode active material layer on the positive electrode current collector, and the positive electrode active material layers include a positive electrode active substance; and an acrylonitrile-based binder. The acrylonitrile-based binder reacts with the cyclic carbonate compound at a temperature of at least about 100°C or higher to form a gel.

## Description

### BACKGROUND

The present disclosure relates to a positive electrode, and to a rechargeable lithium battery including the positive electrode.

With increasing presence of battery-powered electronic devices such as, e.g., mobile phones, notebook computers, electric vehicles, and the like, the demand for rechargeable batteries with high energy density and large capacity is increasing. Accordingly, enhancing the performance of rechargeable lithium batteries may be advantageous.

A rechargeable lithium battery generally includes a positive electrode, a negative electrode, and an electrolyte solution. Both the positive and negative electrodes contain active materials capable of lithium-ion intercalation and deintercalation. Electrical energy is generated through oxidation and reduction reactions as lithium ions move between the electrodes during charging and discharging.

### SUMMARY

An object of the present disclosure is to provide a positive electrode capable of delaying and blocking lithium-ion conduction by gelling an electrolyte solution impregnated at a high temperature.

Another object of the present disclosure is to provide a rechargeable lithium battery including the positive electrode.

A positive electrode according to examples of the present disclosure includes a positive electrode current collector, and a positive electrode active material layer on the positive electrode current collector. The positive electrode active material layer includes a positive electrode active material and an acrylonitrile-based binder. The acrylonitrile-based binder is configured to react with a cyclic carbonate compound at a temperature of about 100°C or higher to form a gel, and the acrylonitrile-based binder is a polymer including a repeating unit represented by the following chemical formula 1.

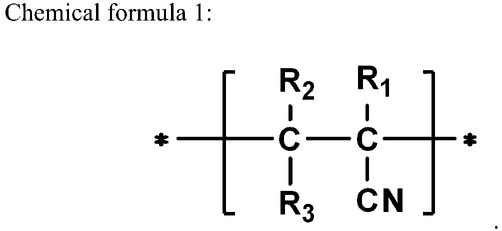

In the above chemical formula 1, R₁, R₂, and R₃ each independently is or includes a hydrogen atom, a halogen atom, or a substituted or unsubstituted C1-C3 alkyl group.

A rechargeable lithium battery according to another example concept of the present disclosure includes a positive electrode including a positive electrode current collector, and a positive electrode active material layer on the positive electrode current collector; a negative electrode; a separator interposed between the positive electrode and the negative electrode; and an electrolyte solution including a cyclic carbonate compound. The positive electrode active material layer includes a positive electrode active material and an acrylonitrile-based binder, and the acrylonitrile-based binder is configured to react with the cyclic carbonate compound at a temperature of about 100°C or higher to form a gel. The acrylonitrile-based binder includes a repeating unit represented by chemical formula 1.

A rechargeable lithium battery according to another example concept of the present disclosure includes a positive electrode including a positive electrode current collector, and a positive electrode active material layer on the positive electrode current collector; a negative electrode; a separator interposed between the positive electrode and the negative electrode; and an electrolyte solution. The positive electrode active material layer includes an acrylonitrile-based binder, and an amount of the acrylonitrile-based binder is in a range of about 0.3 wt% to about 3.0 wt%. The electrolyte solution includes at least one of ethylene carbonate (EC) and fluoroethylene carbonate (FEC). The acrylonitrile-based binder may be configured to react with the cyclic carbonate compound at a temperature of at least about 100°C or higher to form a gel.

### BRIEF DESCRIPTION OF DRAWINGS

FIG. 1 is a schematic conceptual diagram of a rechargeable lithium battery according to example embodiments of the present disclosure.
FIG. 2 to FIG. 5 are cross-sectional views schematically illustrating a rechargeable lithium battery according to example embodiments of the present disclosure.
FIG. 6 is a cross-sectional view for describing a rechargeable lithium battery according to one example embodiment.
FIG. 7 is a cross-sectional view for describing a positive electrode according to one example embodiment.
FIG. 8 is an enlarged view of the "M" region of FIG. 7.
FIG. 9A is a conceptual view for explaining a gel formed on the surface of a positive electrode active material. FIG. 9B is an enlarged view of the "N" region of FIG. 9A.
FIG. 10 shows the cyclic voltage current evaluation results of the aluminum current collector and the cyclic voltage current evaluation results of the polyacrylonitrile-coated aluminum current collector. In FIG. 10, Pristine Al is the result of an aluminum current collector, and PAN is the result of the aluminum current collector coated with polyacrylonitrile.
FIG. 11 shows infrared spectroscopic analysis (FT-IR) results of polyacrylonitrile (PAN) and a polymer in a gel (PAN-EC) formed by reacting polyacrylonitrile and ethylene carbonate (EC) at 100°C.
FIG. 12A shows the result of measuring the viscosity at 25 °C. after forming a gel (after PAN-EC gelation) by reacting a state in which polyacrylonitrile (PAN) and ethylene carbonate (EC) are merely mixed (before PAN-EC gelation) at 100 °C.
FIG. 12B shows the result of measuring the viscosity at 25 °C. after forming a gel (after PAN-FEC gelation) by reacting a state in which polyacrylonitrile (PAN) and fluoroethylene carbonate (FEC) are merely mixed (before PAN-FEC gelation) at 100 °C.
FIG. 13 shows the results of impedance spectroscopic analysis of gels obtained by mixing 1.3M LiPF6 with an ethylene carbonate (EC) solvent; and reacting the electrolyte solution with polyacrylonitrile (PAN) at 100°C for 10 minutes and 30 minutes.
FIG. 14 shows the results of impedance spectroscopic analysis of gels obtained by mixing 1.3M LiPF₆ with an ethylene carbonate (EC) solvent; and reacting the electrolyte solution with polyacrylonitrile (PAN) at 150°C for 10 minutes and 30 minutes.
FIG. 15 shows the results of impedance spectroscopy at SOC 50% of a coin cell according to Example 1, and then after storage at 110°C for 10 minutes.
FIG. 16 shows the results of impedance spectroscopy at SOC 50% of the coin cell according to Comparative Example 1, and then after storage at 110°C for 10 minutes.
FIGS. 17A and 17B are images of the surface of the LCO positive electrode active material taken with a scanning electron microscope (SEM) after storing the coin cell according to Example 1 at 110°C for 10 minutes.
FIGS. 18A and 18B are images of the surface of the LCO positive electrode active material taken with a scanning electron microscope (SEM) after storing the coin cell according to Comparative Example 1 at 110°C for 10 minutes.

### DETAILED DESCRIPTION

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present therebetween. In the drawings, some thicknesses may be exaggerated to better illustrate technical details. Throughout the specification, like reference numerals indicate like elements.

The terms used in this description serve only to explain various example embodiments and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

In this description, examples of the halogen atom include a fluorine atom, a chlorine atom, a bromine atom, or an iodine atom.

In this description, "substituted or unsubstituted" may mean that the compound is unsubstituted or substituted with one or more substituents such as a deuterium atom, a halogen atom, a cyano group, a nitro group, an amino group, a silyl group, an oxy group, a thio group, a sulfinyl group, a sulfonyl group, a carbonyl group, a boron group, a phosphine oxide group, a phosphine sulfide group, an alkyl group, an alkenyl group, an alkynyl group, a hydrocarbon ring group, an aryl group, and a heterocyclic group. In addition, each of the substituents illustrated above may be substituted or unsubstituted. For example, a biphenyl group may be interpreted as an aryl group, or may be interpreted as a phenyl group substituted with a phenyl group.

In this description, the alkyl group may be linear or branched. Examples of the alkyl group include, but are not limited to, a methyl group, an ethyl group, an n-propyl group, an isopropyl group, and the like.

On the other hand, in this description, " 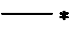 " means the position to which it is connected.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

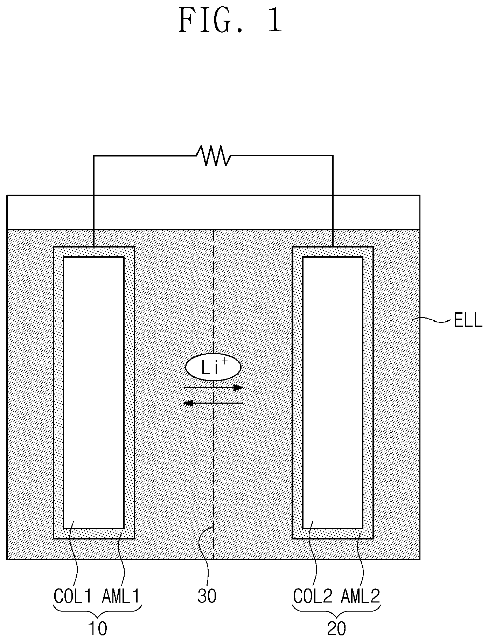

FIG. 1 is a schematic conceptual diagram of a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other with the separator 30 interposed therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1, and a positive electrode active material layer AML1 on the current collector COL1. The positive electrode active material layer AML1 includes a positive electrode active material, and may further include a binder and/or a conductive material.

For example, the positive electrode 10 may further include an additive that can constitute a sacrificial positive electrode.

An amount of the positive electrode active material may be in a range of about 90 wt% to about 99.5 wt% based on 100 wt% of the positive electrode active material layer AML1. Amounts of the binder and the conductive material may be in a range of about 0.5 wt% to about 5 wt%, respectively, based on 100 wt% of the positive electrode active material layer AML1.

The binder attaches the positive electrode active material particles to each other, and attaches the positive electrode active material to the current collector COL1. Examples of the binder may include at least one of polyvinyl alcohol, carboxymethyl cellulose, hydroxypropyl cellulose, diacetyl cellulose, polyvinylchloride, carboxylate polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, or the like, as non-limiting examples.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing copper, nickel, aluminum, silver, and the like, in the form of a metal powder or a metal fiber; a conductive polymer such as a polyphenylene derivative; or a mixture thereof.

Al may be used as the current collector COL1, but the current collector COL1is not limited thereto.

### Positive Electrode Active Material

The positive electrode active material may include a compound (lithiated intercalation compound) that is capable of intercalating and deintercalating lithium. For example, at least one of a composite oxide of lithium and a metal such as or including at least one of cobalt, manganese, nickel, or combinations thereof, may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following chemical formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCOG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of the metal excluding lithium in the lithium transition metal composite oxide. The high-nickel-based positive electrode active material may be capable of realizing high capacity, and can be applied to a high-capacity and high-density rechargeable lithium battery.

### Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may attach the negative electrode active material particles to each other, and may attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, or a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Non-limiting examples thereof may include a carbon-based material such as, e.g., at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 includes at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, or the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, or Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, or the like.

The separator 30 may include a porous substrate and a coating layer including an organic material, an inorganic material, or a combination thereof on one surface, or on both surfaces, of the porous substrate.

The porous substrate may be or include a polymer film formed of or including any one of a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and the inorganic material may be mixed in one coating layer, or a coating layer including an organic material and a coating layer including an inorganic material may be stacked.

### Electrolyte solution (ELL)

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, or the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. In addition, the ketone-based solvent may include cyclohexanone, or the like. The alcohol-based solvent may include at least one of ethanol, isopropyl alcohol, or the like. The aprotic solvent may include at least one of nitriles such as R-CN (wherein R is a C2 to C20 linear, branched, or cyclic hydrocarbon group, a double bond, an aromatic ring, or an ether bond, or the like); amides such as dimethylformamide; dioxolanes such as 1,3-dioxolane, 1,4-dioxolane, or the like; sulfolanes, or the like.

The non-aqueous organic solvents may be used alone, or in a combination of two or more solvents.

For example, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluorobis(oxalato)phosphate (LiDFBOP), or lithium bis(oxalato) borate (LiBOB).

### Rechargeable lithium battery

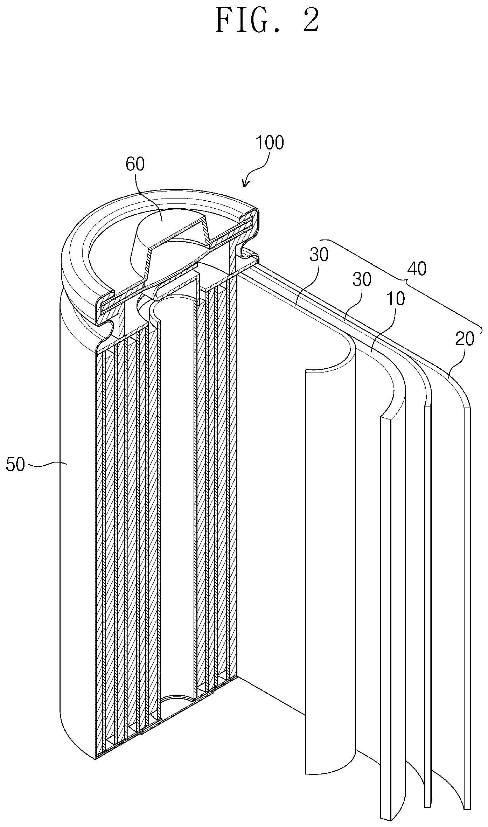

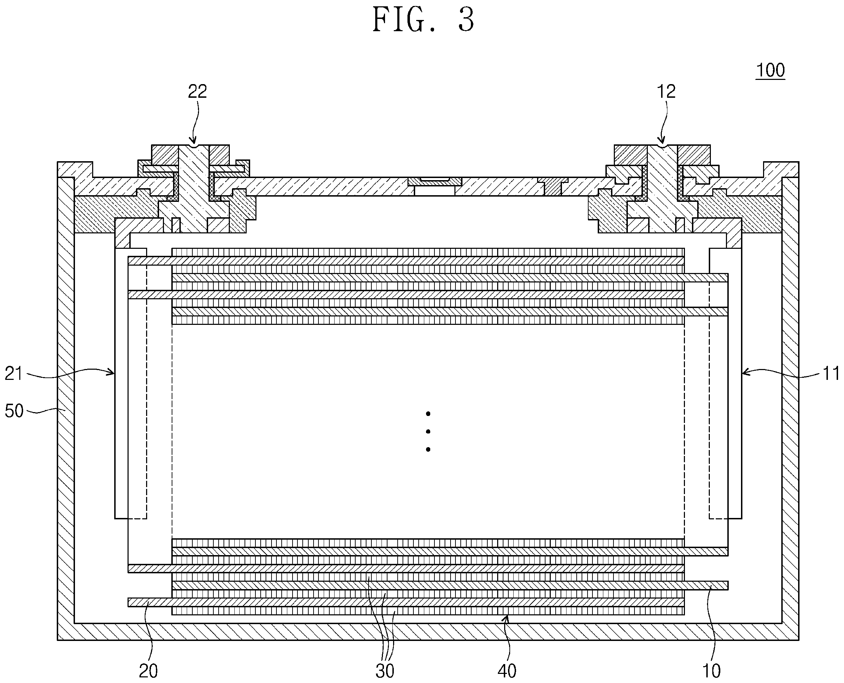

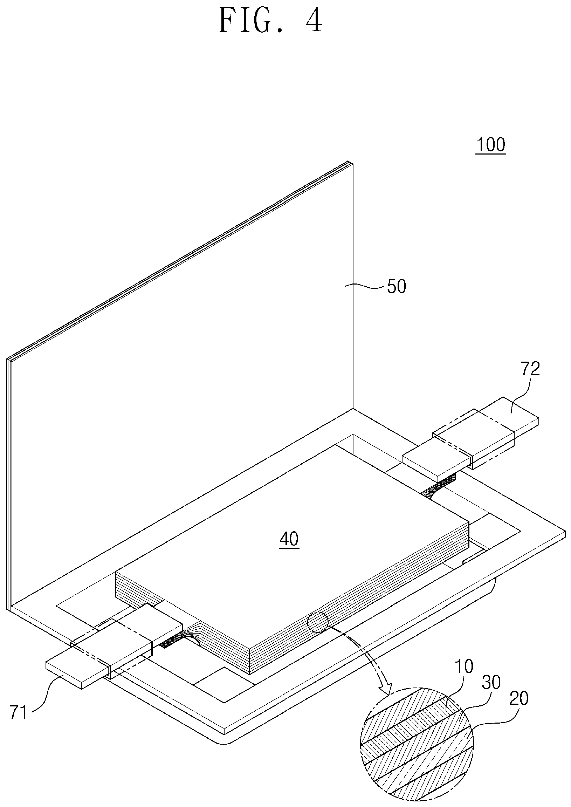

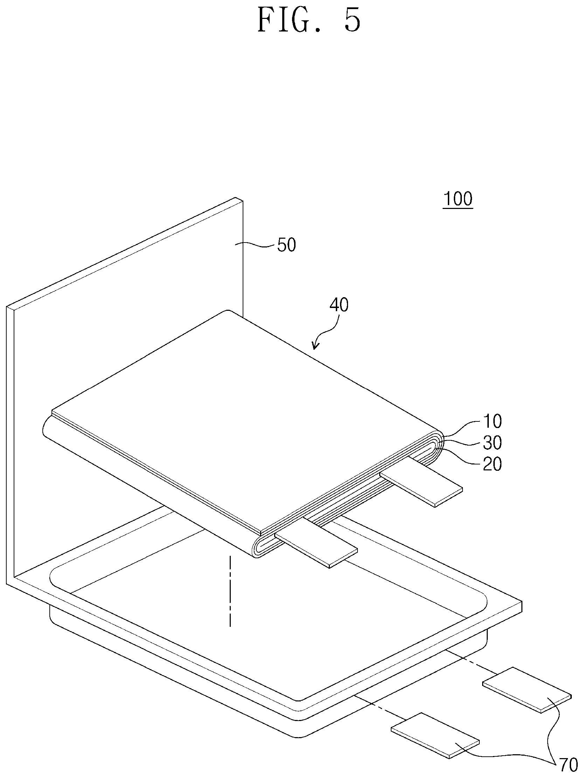

The rechargeable lithium battery may be classified into cylindrical, prismatic, pouch, or coin-type batteries, and the like depending on their shape. FIG. 2 to FIG. 5 are schematic views illustrating a rechargeable lithium battery according to an example embodiment. FIG. 2 illustrates a cylindrical battery, FIG. 3 illustrates a prismatic battery, and FIG. 4 and FIG. 5 illustrate pouch-type batteries. Referring to FIG. 2 to FIG. 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As illustrated in FIG. 4 and FIG. 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to one example embodiment of the present disclosure includes an acrylonitrile-based binder as a positive electrode binder, and thus may react with a cyclic carbonate compound at a temperature of 100°C or higher to form a gel. The gel may delay ion conduction and electron conduction to reduce or prevent further heat generation, and consequently may reduce or prevent fires due to thermal runaway. In addition, by including an acrylonitrile-based binder as the positive electrode binder, high-temperature safety as described above may be ensured without further addition of a separate flame-retardant material, and thus the rechargeable lithium battery having a high energy density may be implemented.

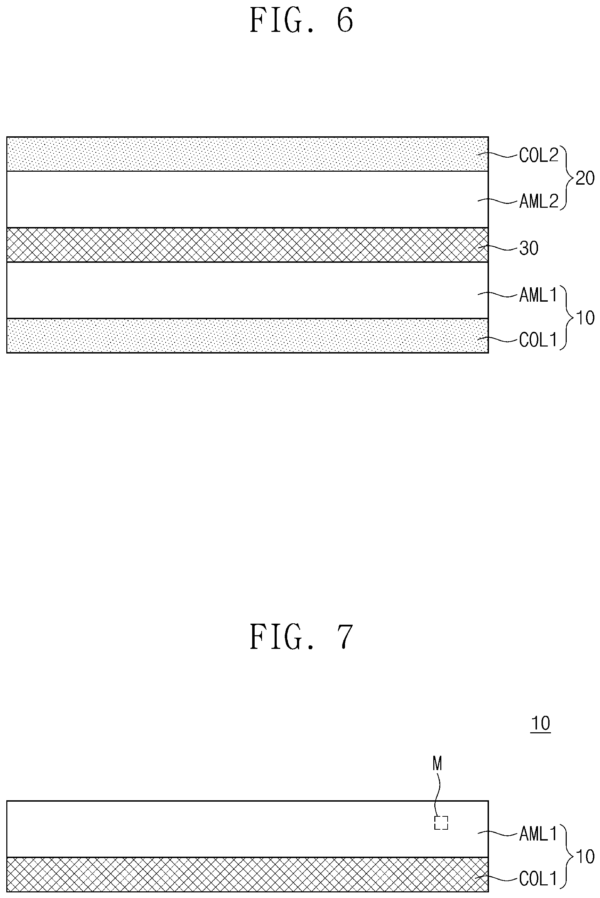

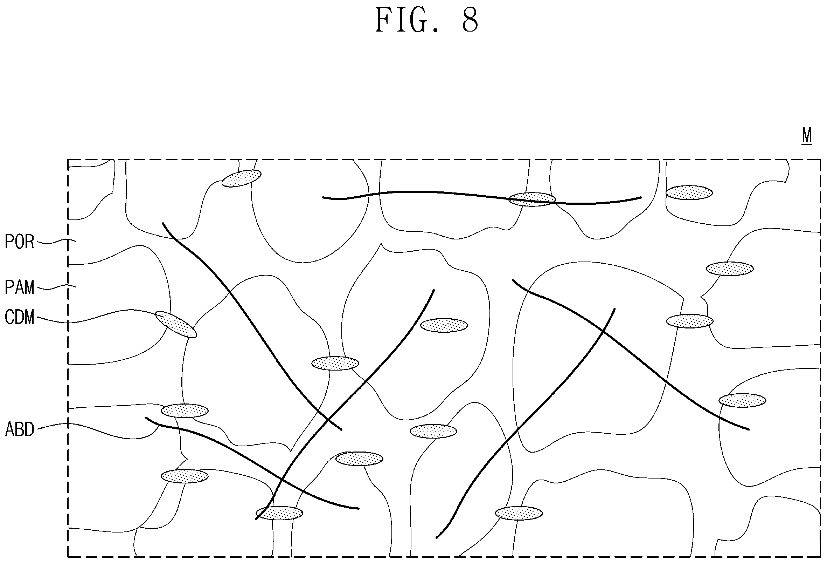

FIG. 6 is a cross-sectional view for describing a rechargeable lithium battery according to one example embodiment. FIG. 7 is a cross-sectional view for describing an anode according to one example embodiment. FIG. 8 is an enlarged view of the "M" region of FIG. 7.

Referring to FIG. 6, a rechargeable lithium battery CEL according to one example embodiment may include a positive electrode 10, a negative electrode 20, and a separator 30 interposed between the positive electrode 10 and the negative electrode 20. The negative electrode 20 and the separator 30 may be the same as the negative electrode 20 and the separator 30 described above with reference to FIG. 1.

The rechargeable lithium battery CEL further includes an electrolyte solution, and the electrolyte solution includes a lithium salt and a cyclic carbonate-based compound. The cyclic carbonate compound is described below. The electrolyte solution may further include a non-aqueous organic solvent other than the cyclic carbonate-based compound. The lithium salt and the non-aqueous organic solvent may be applied in the same manner as described above with reference to FIG. 1.

Referring to FIG. 7, the positive electrode 10 may include a positive electrode current collector COL1 and a positive electrode active material layer AML1 on the positive electrode current collector COL1. As for the positive electrode current collector COL1, the content described above with reference to FIG. 1 can be applied in the same manner.

Referring to FIGS. 7 and 8, in one example embodiment, the positive electrode active material layer AML1 includes a positive electrode active material PAM and an acrylonitrile-based binder ABD. The acrylonitrile-based binder ABD may react with the cyclic carbonate compound to form a gel at a temperature of about 100°C or higher as described below.

The acrylonitrile-based binder ABD refers to a polymer including a repeating unit derived from an acrylonitrile group or a derivative of an acrylonitrile group, and includes both a homopolymer and a copolymer with another monomer.

In one example embodiment, the repeating unit derived from an acrylonitrile group or a derivative of an acrylonitrile group may be represented by the following chemical formula 1.

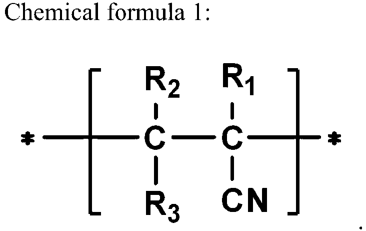

In the above chemical formula 1, R₁, R₂, and R₃ may each independently be or include at least one of a hydrogen atom, a halogen atom, or a substituted or unsubstituted C1-C3 alkyl group.

In one example embodiment, R₁, R₂ and R₃ may each independently be or include at least one of a hydrogen atom, a halogen atom, a substituted or unsubstituted methyl group, or a substituted or unsubstituted ethyl group.

For example, a repeating unit derived from an acrylonitrile group or a derivative of an acrylonitrile group may be represented by the following chemical formulae 1-1 or 1-2.

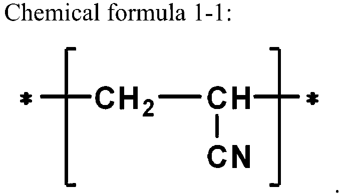

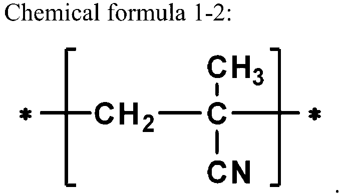

In one example embodiment, the acrylonitrile-based binder ABD may be or include a polymer composed of or including the repeating unit represented by the chemical formula 1. For example, the polymer composed of or including the repeating unit represented by the chemical formula 1 may be polyacrylonitriles PANs composed of or including the repeating unit represented by the chemical formula 1-1, polymethacrylonitrile composed of or including the repeating unit represented by the chemical formula 1-2, or a copolymer composed of or including both the repeating unit represented by the chemical formula 1-1 and the repeating unit represented by the chemical formula 1-2. As an example, the positive electrode active material layer AML1 may include polyacrylonitrile PAN as an acrylonitrile-based binder ABD.

In another example embodiment, the acrylonitrile-based binder ABD may be or include a copolymer further comprising a repeating unit other than the repeating unit represented by the chemical formula 1. An amount of the repeating unit represented by the chemical formula 1 in the copolymer may be about 70 mol % or more, 80 mol % or more, or 90 mol % or more. When the molar ratio of the repeating unit represented by the chemical formula 1 in the copolymer may be less than the above range, the number of nitrile groups included in the copolymer decreases, and the polymerization reaction with the cyclic carbonate compound described below does not sufficiently occur. Therefore, gelation of the cyclic carbonate compound may not be sufficiently performed, and it may be challenging to secure a fire reduction or prevention effect. For example, in the case of a nitrile butadiene rubber NBR, since the amount of the repeating unit derived from an acrylonitrile group is 50 mol % or less, gelation is not sufficiently performed, and thus it may be challenging to secure a fire reduction or prevention effect due to delayed ion conduction and electron conduction.

In one example embodiment, the gel formed by the reaction of the acrylonitrile-based binder ABD and the cyclic carbonate compound may have a viscosity of about 100 mPa·s or more at a temperature of about 25°C and a shear rate of about 10 s⁻¹. For example, the viscosity may be between about 100 mPa·s and about 150 mPa·s, or between about 110 mPa·s to about 130 mPa·s. The viscosity may be measured using, for example, a rheometer-based viscometer or a rotational rheometer, but is not limited thereto. In one example embodiment, the viscosity may be measured using a rotational rheometer equipped with a parallel plate geometry under a shear rate of 10 s⁻¹ at 25°C.

In one example embodiment, the ionic conductivity of the gel may be between about 0.5×10⁻³ S/cm and about 2.0×10⁻³ S/cm. For example, the ionic conductivity of the gel measured via impedance spectroscopic analysis at about 25°C may be in a range of about 0.5×10⁻³ S/cm to about 2.0×10⁻³ S/ cm, or about 0.5× 10⁻³S/cm to about 1.5×10⁻³S/cm.

In one example embodiment, the weight average molecular weight Mw of the acrylonitrile-based binder ABD may be in a range of about 50,000 g/mol to about 500,000 g/mol. The weight average molecular weight (Mw) may be measured by gel permeation chromatography (GPC) using polystyrene standards.

In one example embodiment, an amount of the acrylonitrile-based binder ABD in the positive electrode active material layer AML1 may be in a range of about 0.3 wt% to about 3.0 wt% based on 100% by weight of the total weight of the positive electrode active material layer AML1. For example, the amount of the acrylonitrile-based binder ABD in the positive electrode active material layer AML1 may be in a range of about 0.3 wt % to about 3.0 wt %, about 0.5 wt % to about 2.7 wt %, or about 0.8 wt % to about 1.1 wt %. When the binder has the above amount range, high-temperature safety may be ensured while maintaining desired or improved charge-discharge characteristics and lifetime characteristics.

The content of components such as the positive electrode active material PAM, the acrylonitrile-based binder ABD, and the conductive material CDM in the positive electrode active material layer AML1 may be measured by known analysis methods. In one example embodiment, the amount of the acrylonitrile-based binder ABD in the positive electrode active material layer AML1 may be measured using techniques such as thermogravimetric analysis (TGA), Elemental Analysis, Fourier Transform infrared spectroscopy (FT-IR), Raman spectroscopy, and gas chromatography. As an example, after the active material layer of the positive electrode to be measured is cut into a predetermined or desired size and sampled, the acrylonitrile-based binder content in the sample may be defined as the acrylonitrile-based binder content in the positive electrode active material layer.

Referring to FIG. 8, the positive electrode active material layer AML1 may further include a conductive material CDM.

The conductive material CDM may be applied in the same manner as the conductive material of the positive electrode 10 described above with reference to FIG. 1.

In one example embodiment, the conductive material CDM may include at least one of natural graphite, artificial graphite, carbon black, acetylene black, Ketjen black, carbon fiber, carbon nanofiber, or carbon nanotube. For example, the conductive material CDM may include carbon black.

In one example embodiment, an amount of the conductive material CDM in the positive electrode active material layer AML1 may be in a range of about 0.01 wt% to about 1 wt% based on 100% by weight of the total weight of the positive electrode active material layer AML1. For example, the amount of the conductive material CDM in the positive electrode active material layer AML1 may be in a range of about 0.1 wt% to about 0.8 wt%, about 0.2 wt% to about 0.6 wt%, or about 0.3 wt% to about 0.4 wt%.

In one example embodiment, the positive electrode active material layer AML1 may include about 0.01 wt % to about 1 wt % of carbon nanotubes as a conductive material. When the conductive material has the above amount range, the electrical conductivity can be improved while maintaining the high energy density of the rechargeable lithium battery. For example, the carbon nanotubes may be or include at least one of, but not limited to, single-walled carbon nanotubes (SWCNTs), multi-walled carbon Nanotubes (MWCNTs) or thin-walled carbon nanotubes (TWCNT).

In one example embodiment, the type of the positive electrode active material (PAM) is not particularly limited as long as the PAM is or includes a lithium transition metal oxide. The content of the lithium transition metal oxide can be equally applied with reference to FIG. 1. For example, the positive electrode active material (PAM) may include at least one of a lithium nickel-based oxide, a lithium cobalt-based oxide, lithium manganese-based oxide, an iron lithium phosphate-based compound, or a cobalt-free nickel-manganese-based oxide.

In another example embodiment, the positive electrode active material PAM may include at least one of lithium cobalt oxide (LCO) or a layered high nickel oxide. The high nickel oxide of the layered structure may be or include a lithium transition metal oxide in which the content of nickel relative to about 100 mol % of the total metal excluding lithium is at least about 70 mol %, or at least about 80 mol %. Although the positive electrode active materials have the advantage of high energy density, thermal runaway may occur during battery operation due to low thermal stability. Accordingly, when the above-described positive electrode active materials are applied, the introduction of a flame-retardant material or a separate heat management system is required, but when used together with the acrylonitrile-based binder ABD and the cyclic carbonate-based compound of the present disclosure, the fire risk may be more effectively reduced while maintaining the performance such as the energy density, the charge/discharge characteristics, and the life characteristics of the battery.

For example, the positive electrode active material PAM may include at least one of the layered positive electrode active materials represented by the following chemical formulas 2 or 3.

Chemical formula 2: Liₐ₁Coₓ₁M¹_{y1}O_{c1}.

In Chemical formula 2, 0.8 ≤a1 ≤ 1.2, 0.9 ≤x1 ≤ 1.0, 0 ≤ y1 ≤0.1, and 1.8 ≤ c2 ≤ 2.2 may be satisfied. x1+yl=1 may be satisfied.

In Chemical formula 2, M¹ may be or include at least one of Al, Cr, Mn, Fe, Mg, La, Ce, Sr, and V.

Chemical formula 3: Liₐ₂Niₓ₂Co_{y2}M²_{z2}O_{2-b2}.

In Chemical formula 3, 0.8 ≤a2 ≤ 1.2, 0.7 ≤x2 ≤0.98, 0.01 ≤ y2 ≤0.2, 0.01 ≤ z2 ≤0.2, 0 ≤b2 ≤0.05, and x2+y2+z2=1.

In chemical formula 3, M² may be or include Mn or Al.

In one example embodiment, an amount of the positive electrode active material PAM in the positive electrode active material layer AML1 may be about 95 wt% or more based on 100% by weight of the total weight of the positive electrode activity material layer AML2. For example, the amount of the positive electrode active material PAM in the positive electrode active material layer AML1 may be in a range of about 95 wt% to about 99 wt%, about 96 wt% to about 99 wt%, about 97 wt% to about 99 wt% or about 98 wt% to about 99 wt%. When the positive electrode active material PAM has the amount range as described above, a high-energy-density rechargeable lithium battery that is desired or improved in both charge-discharge characteristics and life characteristics may be realized.

Referring to FIG. 6 to FIG. 8, the positive electrode 10 may be impregnated with an electrolyte solution. For example, a void POR is formed between the positive electrode active material PAM in the positive electrode active material layer AML1, and the void POR may be impregnated with the electrolyte solution described above.

The electrolyte solution may include a cyclic carbonate-based compound. The cyclic carbonate-based compound in the electrolyte solution may react with the acrylonitrile-based binder ABD described above at a temperature of about 100°C or more to form a gel.

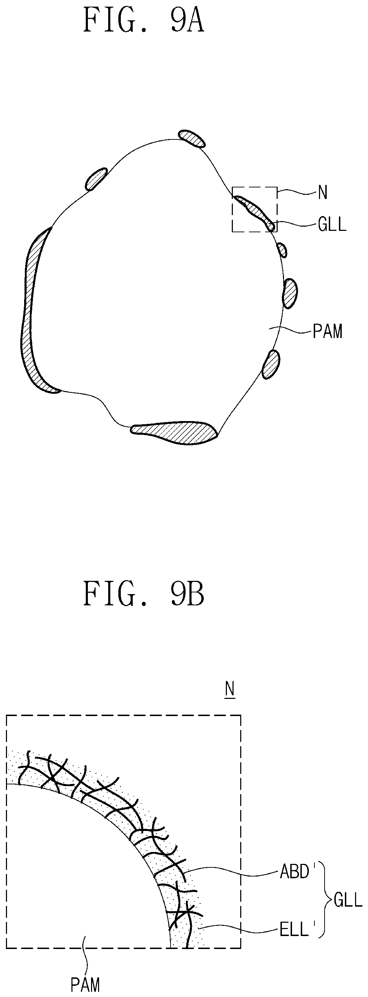

FIG. 9A is a conceptual view for explaining a gel formed on the surface of a positive electrode active material. FIG. 9B is an enlarged view of the "N" region of FIG. 9A.

Referring to FIGS. 9A and 9B, the positive electrode active material PAM may further include a gel layer GLL formed on a surface thereof. The gel layer GLL may include the gel described above. The gel may be or include a semi-solid composite formed by the interaction of a polymer ABD' formed by the reaction of a cyclic carbonate-based compound and an acrylonitrile-based binder ABD; and the remaining electrolyte solution ELL' . The polymer ABD' may include an amide bond. In one example embodiment, the cyclic carbonate-based compound may be represented by the following chemical formula 4.

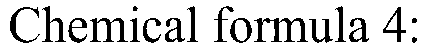

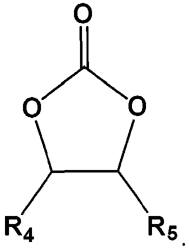

In the above chemical formula 4, R₄ and R₅ may each independently be or include a hydrogen atom or a halogen atom.

In one example embodiment, the cyclic carbonate-based compound may include at least one of ethylene carbonate EC and fluoroethylene carbonate FEC.

Referring to FIG. 7, in one example embodiment, the loading level of the positive electrode 10 may be in a range of about 15 mg/cm² to about 40 mg/cm², about 15 mg/cm² to about 30 mg/cm² or about 15 mg/cm² to about 20 mg/cm ². The loading level of the positive electrode may be defined as the ratio of the mass of the positive electrode active material layer per unit area.

In one example embodiment, the mixture density of the positive electrode 10 may be at least about 3.5 g/cc or at least about 4.0 g/cc. For example, the mixture density of the positive electrode 10 may be about 4.2 g/cc. The mixture density of the positive electrode may be defined as the ratio of the mass to the volume of the positive electrode active material layer in which the pressing process is completed. For example, the mass and volume of the sample may be measured after preparing the sample by cutting the positive electrode active material layer of the positive electrode in which the rolling process has been completed into a given area (e.g., a circle or a rectangle). The volume may be calculated by multiplying the area by the average value of the thicknesses measured at the three points. The unit of the mixture density may be expressed in g/cc. As an example, the mixture density (g/cc) may be calculated by dividing the loading level (mg/cm²) by the thickness (µm) and multiplying the resulting number by 10.

A rechargeable lithium battery according to example embodiments of the present disclosure includes an acrylonitrile-based binder and a cyclic carbonate compound, thereby inducing gel formation at a temperature of about 100°C or higher. The formed gel may reduce or suppress thermal runaway by delaying or blocking the movement of lithium ion and electrons. Accordingly, the occurrence of a fire caused by thermal runaway may be effectively reduced or prevented.

Hereinafter, Examples and Comparative Examples of the present disclosure are described. However, the following examples are merely examples of the present disclosure, and the present disclosure is not limited to the following examples.

### Example 1

### Positive electrode:

LiCoO₂ (LCO) was prepared as a positive electrode active material. Polyacrylonitrile PAN having a weight average molecular weight of about 150,000 g/mol was prepared as an acrylonitrile-based binder. A carbon nanotube was prepared as a conductive material.

A positive electrode active material slurry was prepared by mixing an LCO positive electrode active material, a polyacrylonitrile binder, and a conductive material in an N-methyl pyrrolidone solvent at a weight ratio of 98.7:0.9:0.4. The positive electrode active material slurry was applied onto an aluminum current collector, dried, and rolled to produce a positive electrode having a loading level of about 17.5 mg/cm² and a mixture density of about 4.2 g/cc.

### Coin Cell, Rechargeable lithium battery:

A lithium counter electrode was used as a negative electrode, and an electrolyte solution in which 1.3 M LiPF₆ was added to a solvent in which ethylene carbonate EC and diethyl carbonate DEC were mixed at a volume ratio of 3:7 was used to prepare a coin cell. Specifically, a separator made of a porous polyethylene PE film was interposed between the positive electrode and the lithium counter electrode prepared as described above, and an electrolyte solution was injected to prepare a coin cell.

### Example 2

A positive electrode was produced in the same manner as in Example 1, with a difference that the LCO positive electrode active material, the polyacrylonitrile binder, and the conductive material were mixed at a weight ratio of 98.8:0.9:0.3. A rechargeable lithium battery was produced in the same manner as in Example 1.

### Example 3

A positive electrode was produced in the same manner as in Example 1, with a difference that the LCO positive electrode active material, the polyacrylonitrile binder, and the conductive material were mixed at a weight ratio of 98.6:0.9:0.5. A rechargeable lithium battery was produced in the same manner as in Example 1.

### Example 4

A positive electrode was produced in the same manner as in Example 1, with a difference that the LCO positive electrode active material, the polyacrylonitrile binder, and the conductive material were mixed at a weight ratio of 99.1:0.5:0.4. A rechargeable lithium battery was produced in the same manner as in Example 1.

### Example 5

A positive electrode was produced in the same manner as in Example 1, with a difference that the LCO positive electrode active material, the polyacrylonitrile binder, and the conductive material were mixed at a weight ratio of 97.8:1.8:0.4. A rechargeable lithium battery was produced in the same manner as in Example 1.

### Example 6

A positive electrode was produced in the same manner as in Example 1, with a difference that the LCO positive electrode active material, the polyacrylonitrile binder, and the conductive material were mixed at a weight ratio of 96.9:2.7:0.4. A rechargeable lithium battery was produced in the same manner as in Example 1.

### Example 7

A positive electrode and a negative electrode were produced in the same manner as in Example 1. Instead of using ethylene carbonate EC as the electrolyte solution solvent, a solvent in which ethyl methyl carbonate EMC, diethyl carbonate DEC, and fluoroethylene carbonate FEC were mixed at a volume ratio of 45:45:10 was used to prepare a rechargeable lithium battery.

### Comparative Example 1

A positive electrode was prepared in the same manner as in Example 1, with a difference that polyvinylidene fluoride(PVDF) was prepared instead of the polyacrylonitrile binder as the binder. That is, an LCO positive electrode active material, a PVDF binder, and a conductive material were mixed in an N-methyl pyrrolidone solvent at a weight ratio of 98.7:0.9:0.4 to prepare a positive electrode active material slurry and a positive electrode. A rechargeable lithium battery was produced in the same manner as in Example 1.

Table 1 below shows the composition of the positive electrode active material layer of Examples and Comparative Examples, and the solvent included in the electrolyte solution in the rechargeable lithium battery.

**Table 1**

| Categorization | Amount (wt %) | | | Binder Type | Electrolyte solution Solvent |
|---|---|---|---|---|---|
| | Positive Electrode Active Material | Binders | Conductive Material | | |
| Example 1 | 98.7 | 0.9 | 0.4 | PAN | EC/DEC |
| Example 2 | 98.8 | 0.9 | 0.3 | PAN | EC/DEC |
| Example 3 | 98.6 | 0.9 | 0.5 | PAN | EC/DEC |
| Example 4 | 99.1 | 0.5 | 0.4 | PAN | EC/DEC |
| Example 5 | 97.8 | 1.8 | 0.4 | PAN | EC/DEC |
| Example 6 | 96.9 | 2.7 | 0.4 | PAN | EC/DEC |
| Example 7 | 98.7 | 0.9 | 0.4 | PAN | DEC/EMC/FEC |
| Comparative Example 1 | 98.7 | 0.9 | 0.4 | PVDF | EC/DEC |

### Evaluation Example 1: Cyclic Voltage Current Evaluation

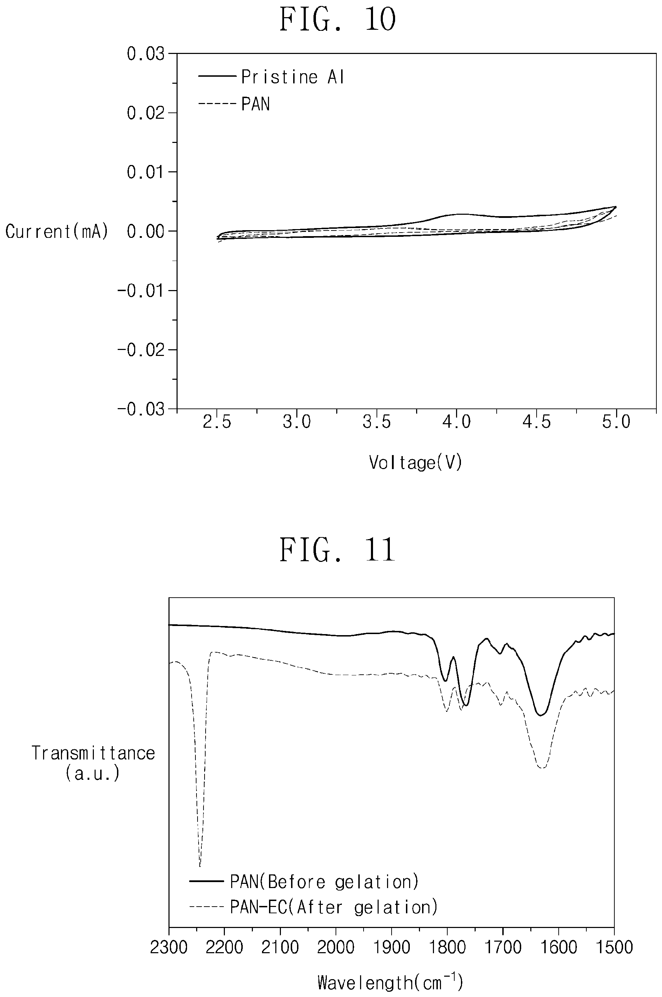

In order to measure the redox stability of the acrylonitrile-based binder, polyacrylonitrile PAN was applied on an aluminum foil, and then subjected to cyclic voltage current evaluation, and the results are shown in FIG. 10. As a comparison group, aluminum foil (Pristine Al) to which nothing was applied was used. Referring to FIG. 10, it can be confirmed that the electrochemical stability of the PAN is desired or improved.

### Evaluation Example 2: FT-IR Spectroscopy

Structural analysis of a gel formed by the reaction of an acrylonitrile-based binder and a cyclic carbonate compound was performed. Specifically, infrared spectroscopic analysis was performed for structural analysis of the polymer included in the gel. Polyacrylonitrile PAN and ethylene carbonate were reacted at 100°C followed by infrared spectroscopy FT-IR. Infrared spectroscopic analysis FT-IR for PAN was performed together as a comparison group. Transmittance at wavenumbers of 1500 cm⁻¹ to 2300 cm⁻¹ was then shown in FIG. 11. Referring to FIG. 11, the acrylonitrile-based binder PAN can be confirmed to include a nitrile group by observing a clear absorption peak around 2230 cm⁻¹. On the other hand, in the case of the polymer EC-PAN formed by the above reaction, it can be confirmed that an absorption peak corresponding to a nitrile group is not observed, and an absorption peak corresponding to an amide bond is clearly observed. This confirms that the polymer formed by the reaction of the nitrile group of the PAN with ethylene carbonate includes an amide bond.

### Evaluation Example 3: Gel Viscosity Evaluation

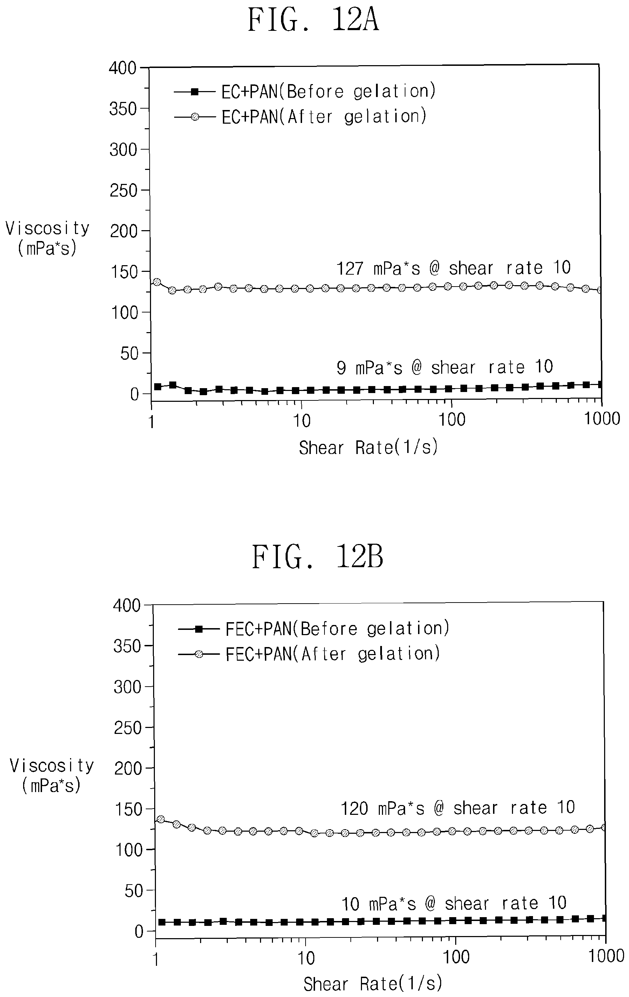

The viscosity of a gel formed by the reaction of an acrylonitrile-based binder and a cyclic carbonate compound was measured at 25 °C by using a rotary rheometer equipped with a parallel plate geometry. Viscosity when the acrylonitrile-based binder and the cyclic carbonate compound were simply mixed was measured together as a comparison group. Referring to FIG. 12A, it can be seen that the viscosity of EC+PAN (after gelation) at a shear rate of 10 s⁻¹ and 25 °C is about 127 mPa·s, which is significantly higher than the EC+PAN of about 9 mPa·s (before gelation). Similarly, it can be seen that the viscosity of FEC+PAN (after gelation) at a shear rate of 10 s⁻¹ and 25 °C is about 120 mPa·s, which is significantly higher than the viscosity of FEC+ PAN (before gelation) of about 10 mPa·s. This confirms that the acrylonitrile-based binder can react with a cyclic carbonate compound such as ethylene carbonate or fluoroethylene carbonate to form a gel.

### Evaluation Example 4: Impedance Spectroscopy (Conductivity Evaluation)

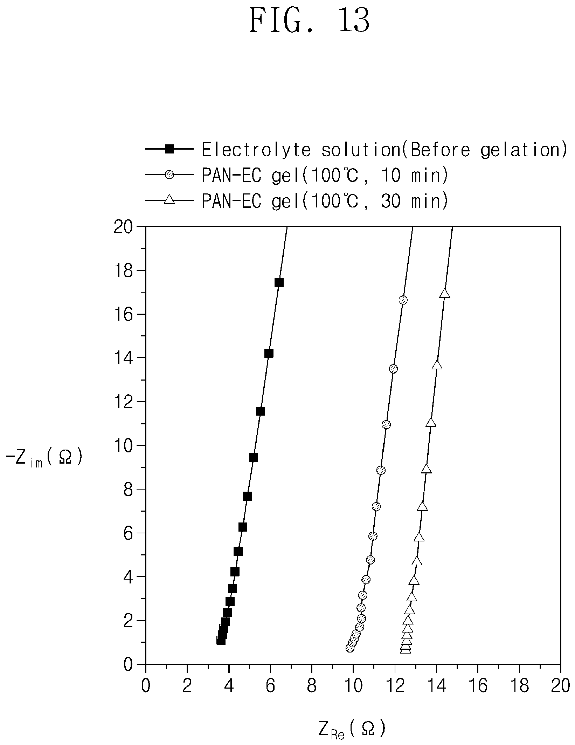

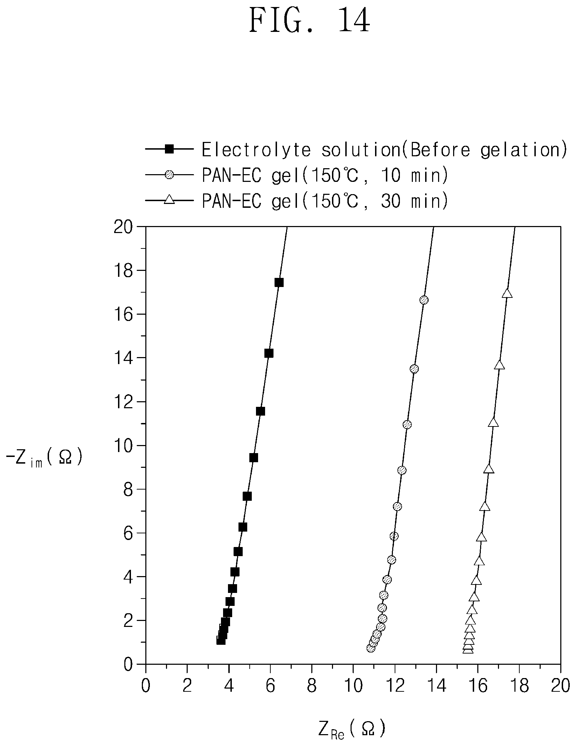

In order to confirm the high-temperature safety effect of a gel formed by the reaction of an acrylonitrile-based binder and a cyclic carbonate compound, an impedance spectroscopic analysis was performed on an electrolyte solution gelled with polyacrylonitrile PAN. Specifically, polyacrylonitrile PAN was added at a concentration of 0.05 mg/ml to an electrolyte solution in which 1.3 M LiPF₆ was mixed with an ethylene carbonate (EC) solvent, and then reacted at 100 °C and 150 °C to perform impedance spectroscopic analysis after 10 minutes and 30 minutes, respectively. As a comparison group, an impedance spectroscopic analysis was performed on an electrolyte solution obtained by mixing 1.3 M LiPF₆ with an ethylene carbonate (EC) solvent, and the results are shown in Table 2 below, and in FIG. 13 and FIG. 14. In FIG. 13 and FIG. 14, -Z_{Re} represents the real part of the impedance, and -Zᵢₘ represents the negative imaginary part of the impedance in the Nyquist plot obtained from the electrochemical impedance spectroscopy (EIS) measurement. Bulk resistance (R_{b}, Ω) corresponds to the intersection point of the high-frequency region with the real horizontal axis in the Nyquist plot.

**Table 2**

| Categorization | Bulk Resistance (R_{b}, Ω) | Ion Conductivity (mS/cm) |
|---|---|---|
| Electrolyte solution | 3.63 | 3.43 |
| Electrolyte solution and PAN (100 °C, 10 min reaction) | 9.84 | 1.26 |
| Electrolyte solution and PAN (100 °C, 30 min reaction) | 12.52 | 0.99 |
| Electrolyte solution and PAN (150 °C, 10 min reaction) | 10.84 | 1.15 |
| Electrolyte solution and PAN (reaction at 150 °C, 30 min reaction) | 15.52 | 0.80 |

Referring to Table 2 and FIGS. 13 and 14, it can be seen that the bulk resistance R_{b} increases and the ion conductivity decreases due to gelation of the cyclic carbonate (ethylene carbonate). That is, it can be confirmed that the cyclic carbonate (ethylene carbonate) is gelled by the reaction with PAN, whereby the ion conductivity is significantly reduced.

### Evaluation Example 5: Initial Charge-Discharge Efficiency

The initial charge/discharge efficiency of each coin cell according to Examples and Comparative Examples was measured and shown in Table 3 below.

Specifically, constant-current charging was performed with a current of 0.1 C within a voltage range of 3.0 V to 4.5 V for each cell, and when the cut-off voltage (4.5 V) was reached, the cell was switched to a constant-voltage mode, and charging was continued until the current decreased to 0.01 C or less. Then, 0.1 C constant current discharge was performed in the same voltage range, and the ratio of the discharge capacity to the charge capacity of the first cycle was converted into a percentage to calculate the initial charge/discharge efficiency.

### Evaluation Example 6: Life Characteristics

For each coin cell according to Examples and Comparative Examples, constant-current charge/discharge (1C/1C) was performed 100 times in the same voltage range (3.0 V to 4.5 V) after the initial charge/discharge as described above. Thereafter, the ratio (cycle capacity retention) of the discharge capacity of the 100th cycle to the initial capacity (discharge capacity of the first cycle based on 1C) was measured, and this was defined as the life characteristics (%) and shown in Table 3 below.

### Evaluation Example 7: Charge Transfer Resistance Evaluation

The charge transfer resistance at SOC 50% was measured for coin cells according to Examples and Comparative Examples and is shown in Table 3. Specifically, the EIS at SOC 50% after the initial charge-discharge progress was measured, and the charge transfer resistance values are shown in Table 3.

**Table 3**

| Categorization | Initial Charge-Discharge Efficiency(%) | Life Characteristics(%) | Charge Transfer Resistance(R_{ct}, Ω) |
|---|---|---|---|
| Example 1 | 90.05 | 92.22 | 11.55 |
| Example 2 | 90.55 | 91.35 | 15.70 |
| Example 3 | 89.55 | 90.98 | 16.55 |
| Example 4 | 90.10 | 87.32 | 10.98 |
| Example 5 | 89.01 | 91.72 | 15.21 |
| Example 6 | 87.21 | 89.39 | 18.84 |
| Example 7 | 89.62 | 93.11 | 10.50 |
| Comparative Example 1 | 88.39 | 91.64 | 16.84 |

### Evaluation Example 8: High-Temperature Safety Evaluation

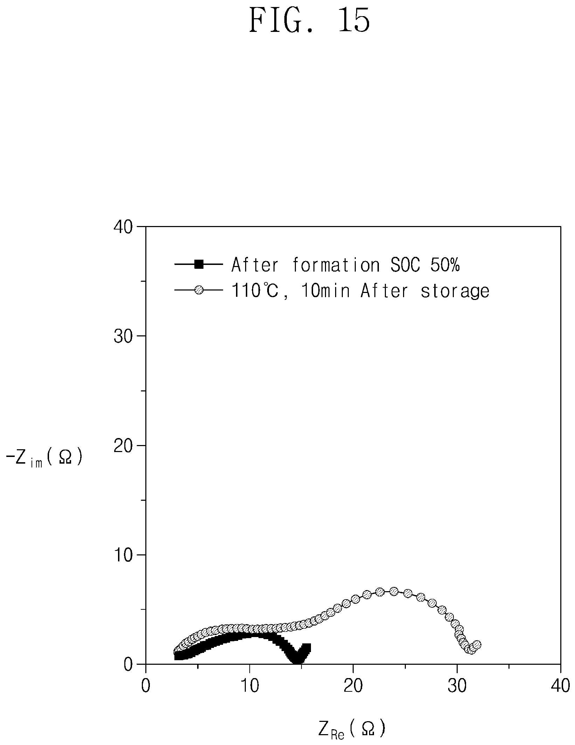

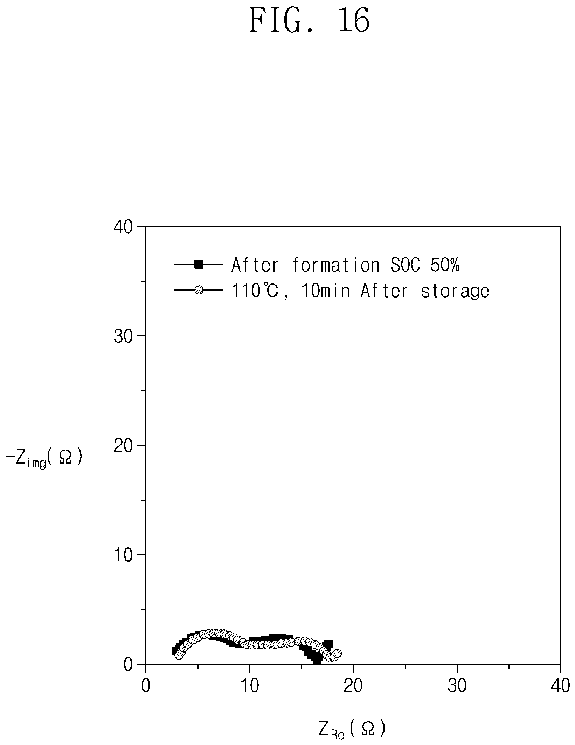

For the coin cells according to Example 1 and Comparative Example 1, the EIS at SOC 50% after the initial charge-discharge progress was measured in the same manner as described above. Thereafter, the coin cell was stored at 110 °C for 10 minutes, and then EIS was measured, which is shown in FIGS. 15 and 16. Referring to FIG. 15, it can be seen that the impedance of the coin cell of Example 1 increases after storage at 110 °C for 10 minutes. That is, since ion conduction and electron conduction were significantly reduced due to gelation, it was confirmed that ion conduction and electronic conduction could be effectively blocked in an abnormal driving situation of the rechargeable lithium battery. On the other hand, referring to FIG. 16, it can be confirmed that the impedance of the coin cell of Comparative Example 1 remains almost similar even after storage at 110 °C for 10 minutes, and thus ion conduction and electron conduction cannot be blocked in an abnormal driving situation.

### Evaluation Example 9: SEM Image of Positive Electrode Active Material Surface

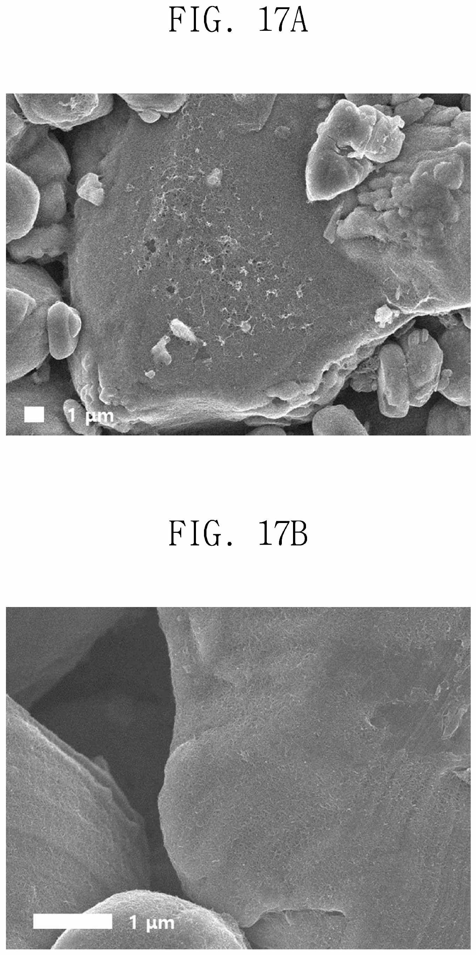

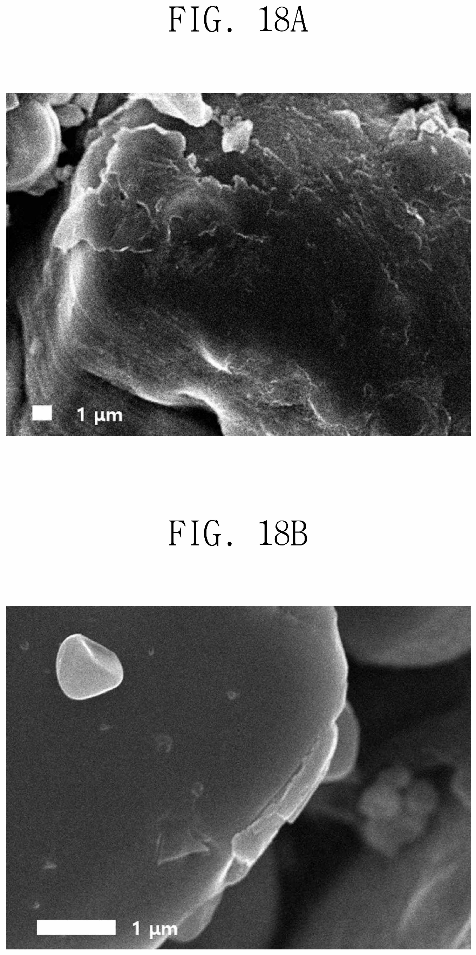

As in Evaluation Example 8, the coin cell according to Example 1 and Comparative Example 1 was stored at 110 °C for 10 minutes to form a gel, and then the surface of the LCO positive electrode active material was photographed with a scanning electron microscope SEM. Referring to FIG. 17A and FIG. 17B, it can be confirmed that a gel layer including a filament-shaped polymer was formed on the surface of the LCO positive electrode active material according to Example 1. On the other hand, referring to FIG. 18A and FIG. 18B, it can be confirmed that any gel layer was not formed on the surface of the LCO positive electrode active material according to Comparative Example 1.

The positive electrode according to example embodiments of the present disclosure is desired or improved in high-temperature safety by including a polyacrylonitrile-based binder capable of gelling an electrolyte solution at high temperature.

The rechargeable lithium battery according to example embodiments of the present disclosure has desired or improved high-temperature safety by including the positive electrode, and fire occurrence due to thermal runaway can be effectively reduced or prevented.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described example embodiments should be regarded as examples rather than limitations of the present disclosure.

## Claims

1. A positive electrode comprising:
a positive electrode current collector; and
a positive electrode active material layer on the positive electrode current collector,
wherein the positive electrode active material layer comprises a positive electrode active material and an acrylonitrile-based binder,
wherein the acrylonitrile-based binder reacts with a cyclic carbonate compound at a temperature of about 100°C or higher to form a gel,
wherein the acrylonitrile-based binder comprises a polymer including a repeating unit represented by the following chemical formula 1: 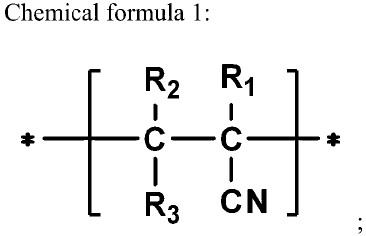
wherein R₁, R₂, and R₃ each independently comprises a hydrogen atom, a halogen atom, or a substituted or unsubstituted C1-C3 alkyl group.

2. The positive electrode as claimed in claim 1, wherein the acrylonitrile-based binder comprises 70 mol% or more of the repeating units represented by the chemical formula 1.

3. The positive electrode as claimed in claim 1 or 2, wherein an amount of the acrylonitrile-based binder in the positive electrode active material layer is in a range of about 0.3 wt% to about 3.0 wt%.

4. The positive electrode as claimed in any one of claims 1 to 3, wherein the positive electrode active material layer further comprises a conductive material, and
wherein an amount of the conductive material in the positive electrode active material layer is in a range of about 0.01 wt % to about 0.5 wt %.

5. The positive electrode as claimed in claim 4, wherein the conductive material comprises at least one of natural graphite, artificial graphite, carbon black, acetylene black, ketjen black, carbon fiber, carbon nanofiber, carbon nanotube, and a combination thereof.

6. The positive electrode as claimed in any one of claims 1 to 5, wherein the repeating unit is represented by one of the following chemical formulae 1-1 and 1-2:

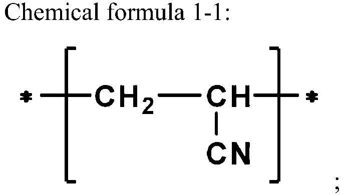

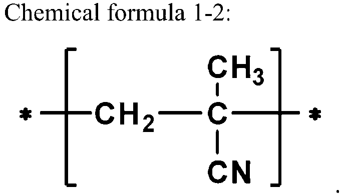

7. The positive electrode as claimed in any one of claims 1 to 6, wherein a weight average molecular weight of the acrylonitrile-based binder is in a range of about 50,000 g/mol to about 500,000 g/mol.

8. A rechargeable lithium battery comprising:
a positive electrode as claimed in any one of claims 1 to 7, comprising a positive electrode current collector, and a positive electrode active material layer on the positive electrode current collector;
a negative electrode;
a separator interposed between the positive electrode and the negative electrode; and
an electrolyte solution comprising a cyclic carbonate compound,
wherein the positive electrode active material layer comprises a positive electrode active material and an acrylonitrile-based binder,
wherein the acrylonitrile-based binder is configured to react with the cyclic carbonate compound at a temperature of about 100°C or higher to form a gel,
wherein the acrylonitrile-based binder comprises a polymer comprising a repeating unit represented by the following chemical formula 1: 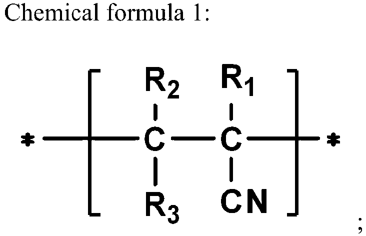
wherein R₁, R₂ and R₃ each independently comprises a hydrogen atom, a halogen atom, or a substituted or unsubstituted C1-C3 alkyl group.

9. The rechargeable lithium battery as claimed in claim 8, wherein the cyclic carbonate compound is represented by the following chemical formula 2: 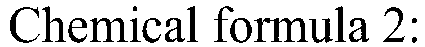 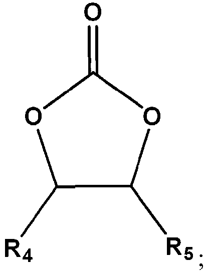 wherein R₄ and R₅ each independently comprises a hydrogen atom or a halogen atom.

10. The rechargeable lithium battery as claimed in claim 8 or 9, wherein the cyclic carbonate compound comprises at least one of ethylene carbonate (EC) or fluoroethylene carbonate (FEC).

11. The rechargeable lithium battery as claimed in any one of claims 8 to 10, wherein the gel has a viscosity of about 100 mPa·s or more at a temperature of about 25°C and a shear rate of about 10 s⁻¹.

12. The rechargeable lithium battery as claimed in any one of claims 8 to 11, wherein the positive electrode active material comprises a gel layer formed on a surface thereof,
wherein the gel layer comprises the gel, and
wherein the gel comprises a polymer including an amide bond.

13. The rechargeable lithium battery as claimed in any one of claims 8 to 12, wherein an ion conductivity of the gel is in a range of about 0.5×10⁻³ S/cm to about 2.0×10⁻³ S/cm.

14. The rechargeable lithium battery as claimed in any one of claims 8 to 13, wherein the repeating unit is represented by the following chemical formula 1-1 or 1-2: 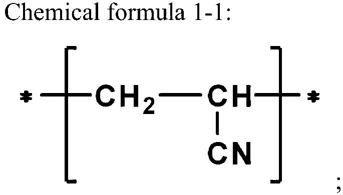 and

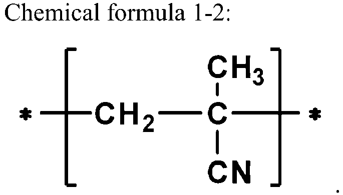

15. A rechargeable lithium battery comprising:
a positive electrode comprising a positive electrode current collector, and a positive electrode active material layer on the positive electrode current collector;
a negative electrode;
a separator interposed between the positive electrode and the negative electrode; and
an electrolyte solution,
wherein the positive electrode active material layer comprises about 0.3 wt% to 3.0 wt% of an acrylonitrile-based binder,
wherein the electrolyte solution comprises at least one of ethylene carbonate (EC) and fluoroethylene carbonate (FEC), and
wherein the acrylonitrile-based binder is configured to react with the at least one of ethylene carbonate (EC) or fluoroethylene carbonate (FEC) at a temperature of about 100°C or higher to form a gel.
